(19) Europäisches Patentamt

European Patent Office

Office européen des brevets

(11) **EP 2 938 503 B1**

(12) **FASCICULE DE BREVET EUROPEEN**

(45) Date de publication et mention de la délivrance du brevet:
**11.01.2017   Bulletin 2017/02**

(21) Numéro de dépôt: **13796109.0**

(22) Date de dépôt: **29.11.2013**

(51) Int Cl.:
**B60C 11/13** *(2006.01)*

(86) Numéro de dépôt international:
**PCT/EP2013/075130**

(87) Numéro de publication internationale:
**WO 2014/102039 (03.07.2014 Gazette 2014/27)**

(54) **BANDE DE ROULEMENT COMPORTANT DES ELEMENTS DE SCULPTURE COMPRENANT UNE COUCHE DE RECOUVREMENT**

LAUFFLÄCHE MIT SKULPTIERTEN ELEMENTEN UND EINER DECKSCHICHT

TREAD COMPRISING SCULPTED ELEMENTS COMPRISING A COVERING LAYER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.12.2012   FR 1262924**

(43) Date de publication de la demande:
**04.11.2015   Bulletin 2015/45**

(73) Titulaires:
• **Compagnie Générale des Etablissements Michelin**
**63000 Clermont-Ferrand (FR)**
• **MICHELIN Recherche et Technique S.A.**
**1763 Granges-Paccot (CH)**

(72) Inventeur: **KANEKO, Shuichi**
**Tokyo 163-1073 (JP)**

(74) Mandataire: **Demaure, Pierre-Yves**
**Manufacture Française**
**des Pneumatiques Michelin**
**23, place des Carmes - Déchaux**
**DGD/PI - F35 - Ladoux**
**63040 Clermont-Ferrand Cedex 9 (FR)**

(56) Documents cités:
**JP-A- H09 150 607      JP-A- 2007 182 160**
**US-A- 3 462 328      US-A- 5 840 137**

EP 2 938 503 B1

## Description

DOMAINE DE L'INVENTION

La présente invention concerne une bande de roulement pour pneumatique destiné à des roulages hivernaux.

ETAT DE LA TECHNIQUE

Un pneumatique pour roulages hivernaux, dit pneumatique neige, doit présenter une qualité d'adhérence suffisante tant sur une chaussée enneigée que sur une chaussée glacée. Or sur ces différents types de sol, les conditions de fonctionnement de la bande de roulement pour une bonne adhérence sont différentes voire antinomiques. Sur une chaussée enneigée, on va essayer de venir « gratter » la neige en créant des surpressions sur des zones précises de la bande de roulement. Sur une chaussée glacée, on cherche à obtenir une pression de contact avec la chaussée importante et la plus homogène possible.

Le document US 5 840 137, correspondant avec les caractéristiques du préambule de la revendication 1, divulgue une bande de roulement comportant une pluralité de rainures délimitées par des parois. Ces parois sont formées par une couche de recouvrement comportant un matériau différent du matériau caoutchouteux constituant la bande de roulement. Plus particulièrement, le matériau de la couche a ici une température de transition vitreuse moyenne (Tg) inférieure à celle du matériau caoutchouteux lui conférant ainsi une plus grande rigidité. Grâce à cette rigidité, il est possible de venir gratter plus facilement la neige sur la chaussée enneigée et en conséquence d'améliorer très fortement l'adhérence sur cette chaussée enneigée. Cependant, les inventeurs ont constaté que la bande de roulement du document US 5 840 137 ne permet pas d'améliorer dans les mêmes proportions l'adhérence sur une chaussée glacée. Cette bande de roulement présente alors un déséquilibre non négligeable entre d'une part ses performances sur une chaussée enneigée et d'autre part ses performances sur une chaussée glacée.

D'autres bandes de roulement sont connus des documents US-A-3,462,328, JP-A-2007 182160 et JP-A-H09 150607.

Il existe donc un besoin de réaliser une bande de roulement d'un pneumatique présentant un meilleur compromis entre une adhérence sur une chaussée enneigée et une adhérence sur une chaussée glacée tout en conservant une très bonne adhérence sur cette chaussée enneigée.

DEFINITIONS

Par « pneumatique », on entend tous les types de bandages élastiques soumis à une pression interne ou non.

Par « pneumatique neige » (« snow tyre » ou « winter tyre » en anglais), on entend un pneumatique repéré par une inscription M+S ou M.S. ou encore M&S, marquée sur au moins un des flancs du pneumatique.

Par « bande de roulement » d'un pneumatique, on entend une quantité de matériau caoutchouteux délimitée par des surfaces latérales et par deux surfaces principales dont l'une est destinée à entrer en contact avec une chaussée lorsque le pneumatique roule.

Par « surface de roulement » d'une bande de roulement, on entend la surface formée par les points de la bande de roulement du pneumatique qui entrent en contact avec la chaussée lorsque le pneumatique roule.

Par « découpure », on entend soit une rainure soit une incision. Plus particulièrement, une découpure correspond à l'espace délimité par des parois de matière se faisant face et distantes l'une de l'autre d'une distance non nulle. Ce qui différencie une incision d'une rainure c'est la valeur prise par cette distance ; dans le cas d'une incision, cette distance est appropriée pour permettre la mise en contact des parois opposées lors du passage dans le contact avec la chaussée. Cette distance pour une incision est ici au plus égale à 2 millimètres (mm). Dans le cas d'une rainure, les parois de cette rainure ne peuvent pas venir en contact l'une contre l'autre dans les conditions usuelles de roulage.

Par « élément en relief » dans une bande de roulement, on entend un élément de gomme faisant protubérance dans cette bande de roulement.

RESUME DE L'INVENTION

L'invention concerne une bande de roulement en matériau caoutchouteux pour pneumatique neige. Ce pneumatique comporte une surface de roulement destinée à être en contact avec une chaussée au cours d'un roulage du pneumatique. Cette bande de roulement est pourvue d'une pluralité de découpures délimitées par des parois situées en vis-à-vis et formant des parois latérales d'éléments en relief de la bande de roulement. Chacune de ces parois latérales débouche sur la surface de roulement pour former une arête. Au moins une paroi latérale d'un élément en relief est formée partiellement ou en totalité par une couche de recouvrement s'étendant à partir de l'arête associée à cette paroi latérale. Ce matériau présente un module élastique supérieur au module élastique du matériau caoutchouteux composant la bande de roulement. L'élément en relief comprend un renfoncement dans sa paroi latérale, ce renfoncement étant délimité par la couche de recouvrement. L'élément en relief ayant une largeur W, la profondeur P du renfoncement est au moins égale à 10% de la largeur W de l'élément et inférieure ou égale à 40% de cette largeur W. Le volume du renfoncement est inférieur à 10% du volume de l'élément en relief.

Dans les premiers instants du contact entre l'élément moulant et la chaussée, celui-ci se comprime ce qui vient refermer partiellement ou en totalité le renfoncement. Le renfoncement permet d'améliore l'adhérence sur une chaussée glacée sans trop dégrader l'adhérence sur une chaussée enneigée, la couche de recouvrement située à proximité de l'arête de l'élément moulant permettant toujours un « grattage » efficace de la neige.

On notera également que le renfoncement a des dimensions limitées par rapport à l'élément moulant, ce qui permet d'éviter toute fragilisation de cet élément moulant.

Dans un mode de réalisation préférentiel, la couche de recouvrement ne s'étend pas au-delà du renfoncement.

Ainsi, la partie supérieure de la paroi latérale va être amenée à fléchir de manière plus importante du fait qu'elle n'est pas recouverte par une couche de recouvrement. Cette flexion est également améliorée par la présence du matériau de recouvrement dans le renfoncement. La répartition des pressions dans l'élément moulant va alors être plus homogène et l'adhérence sur une chaussée glacée améliorée.

Dans un autre mode de réalisation préférentiel, le renfoncement présente, vue en coupe, une forme triangulaire pointant dans l'élément en relief selon une direction qui s'éloigne de l'arête.

Le renfoncement est formé par un élément de moule en saillie. En proposant, un renfoncement avec une forme triangulaire pointant dans une direction opposé à l'arête, on facilite le démoulage de l'élément de moule moulant ce renfoncement.

Dans une variante de réalisation, le renfoncement débouche sur la surface de roulement de la bande de roulement, la couche de recouvrement délimitant ce renfoncement formant un angle inférieur à 90° avec cette surface de roulement.

En donnant un tel angle au niveau de l'arête de la paroi latérale, on améliore la capacité de la bande de roulement à venir « gratter » la neige.

Dans une variante de réalisation, l'élément en relief comporte deux renfoncements débouchant respectivement sur deux parois latérales opposées de cet élément.

Avec la présence de renfoncements dans deux parois latérales opposées de l'élément en relief, on améliore l'adhérence du pneumatique tant au cours d'une phase d'accélération du véhicule qu'au cours d'une phase de freinage.

BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :

- la **figure 1** représente schématique une partie d'une bande de roulement selon l'invention ;

- la **figure 2** représente, vue en coupe, un élément en relief de la bande de roulement de la **figure 1** selon un premier mode de réalisation de l'invention, dans un état au repos ;

- la **figure 3** représente l'élément en relief de la **figure 2** en contact avec une chaussée glacée ;

- la **figure 4** représente un élément en relief selon un second mode de réalisation ;

- la **figure 5** représente l'élément en relief de la **figure 4** en contact avec une chaussée glacée ;

- la **figure 6** représente un élément en relief selon un troisième mode de réalisation ;

- la **figure 7** représente un élément en relief selon un quatrième mode de réalisation ;

- la **figure 8** représente un élément en relief selon un cinquième mode de réalisation.

Dans la description qui va suivre, des éléments sensiblement identiques ou similaires seront désignés par des références identiques.

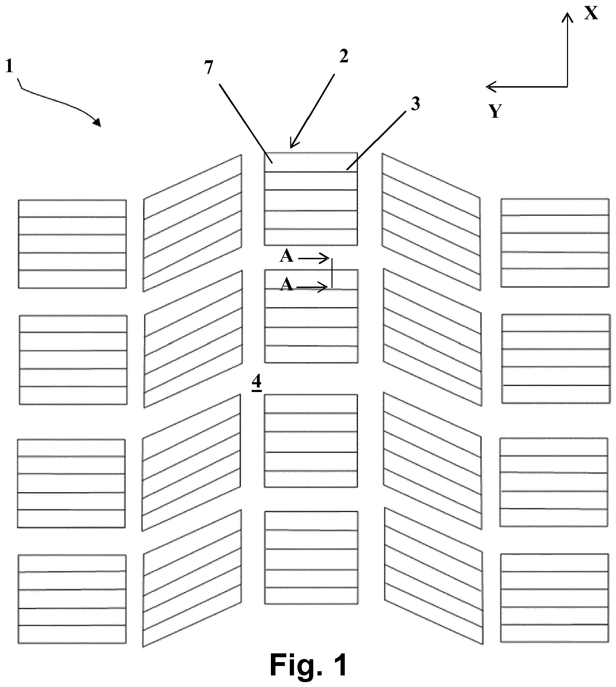

La **figure 1** représente une partie d'une bande de roulement 1 d'un pneumatique neige. Cette bande de roulement comprend une pluralité de blocs de gomme 2 en relief organisés pour former la sculpture de cette bande de roulement. Les blocs de gomme 2 sont délimités par des rainures 4 qui peuvent s'étendre selon une direction axiale Y, parallèlement à l'axe de rotation du pneumatique, selon une direction circonférentielle X, perpendiculaire à la direction axiale Y, ou selon une direction oblique ayant à la fois une composante circonférentielle et une composante axiale non nulles. Chaque bloc de gomme 2 est ici divisé en une pluralité de bandes de gomme 7 séparées par des incisions 3.

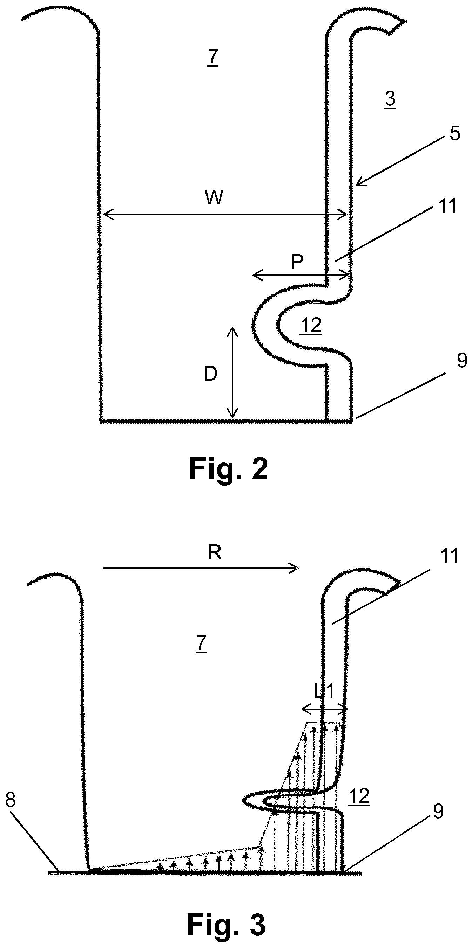

La **figure 2** est une vue en coupe d'une bande 7 selon une ligne A-A de la bande de roulement visible à la **figure 1,** selon un premier mode de réalisation de l'invention. La bande 7 comprend ici une paroi latérale 5 formée par une couche 11 de recouvrement. Cette couche 11 s'étend ici à partir de l'arête 9 jusqu'au fond de l'incision 3 délimitant la bande 7. La bande 7 comprend également un renfoncement 12 délimité par la couche 11 de recouvrement. Ce renfoncement 12 est situé par rapport à l'arête 9 à une distance D inférieure au 2/3 de la hauteur H de la bande 7. En variante, le renfoncement 12 est situé par rapport à l'arête 9 à une distance D inférieure à la moitié de cette hauteur H. De plus, on notera que la profondeur P du renfoncement est au moins égale à 10% de la largeur W de la bande 7 et inférieure ou égale à 40% de cette largeur W. Le volume du renfoncement est quant à lui inférieur à 10% du volume de la bande 7.

La couche 11 de recouvrement présente ici un module élastique supérieur au module élastique du matériau caoutchouteux composant la bande de roulement 1. Un tel matériau est par exemple un matériau élastomère dont le module dynamique de cisaillement G* soumis à une contrainte maximale alternée de 0,7 MPa, à une fréquence de 10 Hz et à une température de -10°C est supérieur à 200 MPa et de préférence supérieur 300 MPa. Dans le présent document, les termes « module élastique G' » et « module visqueux G" » désignent des propriétés dynamiques bien connues de l'homme du métier. Ces propriétés sont mesurées sur un viscoanalyseur de type Metravib VA4000 sur des éprouvettes moulées à partir de compositions crues. Des éprouvettes telles que celles décrites dans la norme ASTM D 5992 - 96 (version publiée en Septembre 2006, initialement approuvée en 1996) à la figure X2.1 (mode de réalisation circulaire) sont utilisées. Le diamètre de l'éprouvette est de 10 mm (elle a donc une section circulaire de 78.5 mm²), l'épaisseur de chacune des portions de composition caoutchouteuse est de 2 mm, ce qui donne un ratio « diamètre sur épaisseur » de 5 (contrairement à la norme ISO 2856, mentionnée dans la norme ASTM, paragraphe X2.4, qui préconise une valeur d/L de 2). On enregistre la réponse d'un échantillon de composition caoutchouteuse vulcanisée soumis à une sollicitation sinusoïdale en cisaillement simple alterné, à la fréquence de 10 Hz. L'éprouvette est sollicitée en cisaillement sinusoïdal à 10 Hz, à contrainte imposée (0.7 MPa), symétriquement autour de sa position d'équilibre. La mesure est réalisée au cours d'une rampe de température croissante de 1,5°C par minute, depuis une température Tmin inférieure à la température de transition vitreuse (Tg) du matériau, jusqu'à une température Tmax qui peut correspondre au plateau caoutchoutique du matériau. Avant de commencer le balayage, on stabilise l'échantillon à la température Tmin pendant 20 min pour avoir une température homogène au sein de l'échantillon. Le résultat exploité est le module élastique de cisaillement dynamique (G') et le module visqueux de cisaillement (G") aux températures choisies (en l'occurrence, 0°, 5° et 20°C). Le « module complexe » G* se définit comme la valeur absolue de la somme complexe des modules élastique G' et visqueux G" : $G^* = \sqrt{(G'^2 + G''^2)}$ .

Dans une variante de réalisation, le matériau élastomère de la couche de recouvrement comprend une composition à base d'au moins un élastomère diénique très fortement chargé en souffre, tel que de l'ébonite.

Dans une autre variante de réalisation, la couche de recouvrement comprend un assemblage de fibres, par exemple un assemblage tridimensionnel de fibres formant un feutre. Les fibres de ce feutre peuvent être choisies dans le groupe des fibres textiles, des fibres minérales et de leur mélange. On notera également que les fibres de ce feutre peuvent être choisies parmi des fibres textiles d'origine naturelle, par exemple, dans le groupe des fibres de soie, de coton, de bambou, de cellulose, de laine et de leurs mélanges.

Dans une autre variante de réalisation, le matériau élastomère de la couche de recouvrement comprend une composition à base d'au moins un polymère thermoplastique, tel que du polyéthylène téréphtalate (PET). Un tel polymère peut présenter un module de Young supérieur à 1 GPa.

La **figure 3** représente la bande 7 de la **figure 2** lorsque celle-ci est chargée et en contact avec une chaussée glacée 8. Dans cet état, le renfoncement 12 se ferme partiellement ou en totalité. Le degré de fermeture de ce renfoncement dépend de la charge appliquée sur la bande 7, du matériau utilisé dans la couche 11, du type de chaussée glacée ou enneigée sur laquelle la bande 7 vient en contact.

On a représenté également une répartition de la charge qui s'applique sur la bande 7. On se place ici dans l'exemple où la bande 7 se déplace vis-à-vis de la chaussée selon une direction de rotation R et le véhicule accélère, c'est-à-dire que c'est l'arête 9 de la bande 7 qui vient en contact en première avec la chaussée 8. La pression exercée par la chaussée 8 sur la bande 7 est maximale à proximité de l'arête 9 et cette pression maximale s'étend sur une largeur L1.

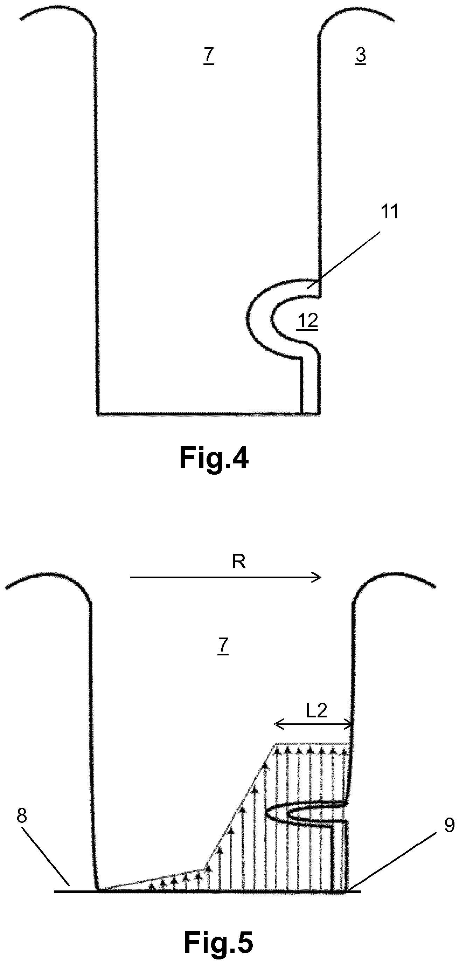

La **figure 4** est une vue en coupe de la bande 7 selon un second mode de réalisation de l'invention. Dans ce mode de réalisation, la couche de recouvrement 11 ne s'étend au-delà du renfoncement 12, c'est-à-dire que la couche 11 ne se retrouve pas dans le fond de l'incision 3 délimitant la bande 7.

La **figure 5** représente la bande 7 de la **figure 4** lorsque celle-ci est chargée et en contact avec la chaussée glacée 8. Les inventeurs ont alors constaté que la pression exercée par la chaussée 8 sur la bande 7 est maximale à proximité de l'arête 9 et cette pression maximale s'étend sur une largeur L2 supérieure à la largeur L1 de la **figure 3.** On améliore ainsi l'adhérence du pneumatique sur la chaussée glacée 8. On se place ici également dans le cas où la bande 7 se déplace vis-à-vis de la chaussée selon une direction de rotation R et le véhicule accélère, c'est-à-dire que c'est l'arête 9 de la bande 7 qui vient en contact en première avec la chaussée 8.

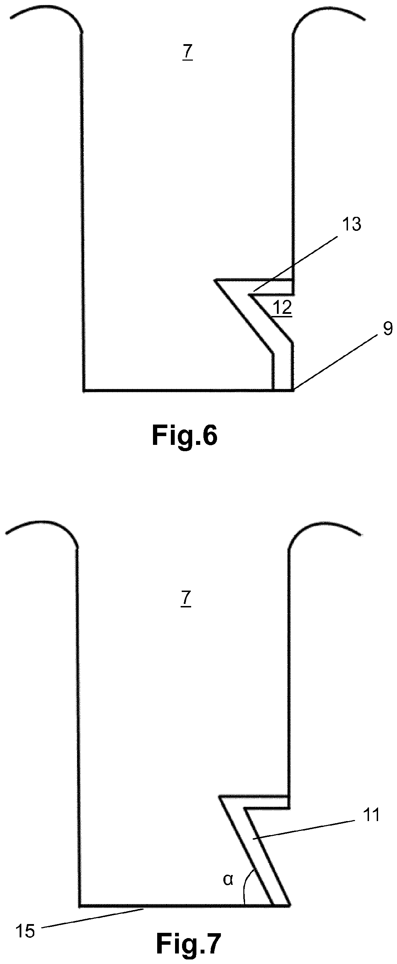

La **figure 6** représente un troisième mode de réalisation de l'invention, dans lequel le renfoncement 12 présente une forme triangulaire avec une pointe 13 dirigée à l'opposé de l'arête 9.

La **figure 7** représente un quatrième mode de réalisation de l'invention, dans lequel le renfoncement 12 débouche sur la surface de roulement 15 de la bande de roulement. La couche de recouvrement 11 forme alors un angle α inférieur à 90°avec cette surface de roulement.

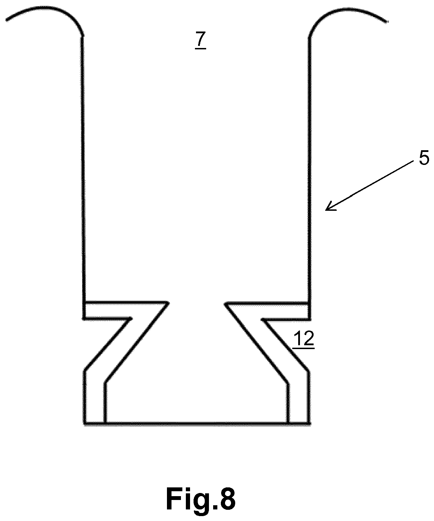

La **figure 8** représente un cinquième mode de réalisation de l'invention, dans lequel la bande 7 comporte deux renfoncements 12 débouchant respectivement sur deux parois latérales 5 opposées de la bande 7.

L'invention n'est pas limitée aux exemples décrits et représentés et diverses modifications peuvent y être apportées sans sortir du cadre des revendications.

## Revendications

1. Bande de roulement en matériau caoutchouteux pour pneumatique neige comportant une surface de roulement destinée à être en contact avec une chaussée au cours d'un roulage du pneumatique, cette bande de roulement (1) étant pourvue d'une pluralité de découpures (3, 4) délimitées par des parois (5) situées en vis-à-vis et formant des parois latérales d'éléments en relief (2, 7) de la bande de roulement, chacune desdites parois latérales coupant la surface de roulement pour former une arête (9), au moins une paroi latérale (5) d'un élément en relief étant formée partiellement ou en totalité par une couche de recouvrement (11) s'étendant à partir de l'arête (9) associée à cette paroi latérale, **caractérisé en ce que** le matériau de la couche (11) de recouvrement présente un module élastique supérieur au module élastique du matériau caoutchouteux composant la bande de roulement, **et en ce que** l'élément en relief (2, 7) comprend dans sa paroi latérale un renfoncement (12) de profondeur P, ce renfoncement étant délimité par la couche de recouvrement (11) et **en ce que** l'élément en relief (2, 7) ayant une largeur W, la profondeur P du renfoncement est au moins égale à 10% de la largeur W de l'élément (2, 7) et inférieure ou égale à 40% de cette largeur W, et **en ce que** le volume du renfoncement (12) est inférieur à 10% du volume de l'élément en relief (2, 7).

2. Bande de roulement selon la revendication 1, **caractérisée en ce que** la couche de recouvrement (11) ne s'étend pas au-delà du renfoncement (12).

3. Bande de roulement selon l'une des revendications 1 ou 2, **caractérisée en ce que** le renfoncement présente, vue en coupe, une forme triangulaire pointant dans l'élément en relief selon une direction qui s'éloigne de l'arête (9).

4. Bande de roulement selon l'une quelconque des revendications 1 à 3, **caractérisée en ce que** le renfoncement (12) débouche sur la surface de roulement de la bande de roulement, la couche de recouvrement (11) délimitant ce renfoncement formant un angle ($\alpha$) inférieur à 90° avec cette surface de roulement.

5. Bande de roulement selon l'une quelconque des revendications 1 à 4, **caractérisée en ce que** l'élément en relief comporte deux renfoncements (12) débouchant respectivement sur deux parois latérales (5) opposées de cet élément.

## Patentansprüche

1. Laufstreifen aus Kautschukmaterial für einen Winterreifen, der eine Lauffläche aufweist, die dazu bestimmt ist, während eines Rollens des Reifens mit einer Straße in Kontakt zu sein, wobei dieser Laufstreifen (1) mit einer Vielzahl von Ausschnitten (3, 4) versehen ist, die durch Wände (5) begrenzt werden, die einander gegenüberliegen und Seitenwände von Reliefelementen (2, 7) des Laufstreifens bilden, wobei jede der Seitenwände die Lauffläche schneidet, um eine Kante (9) zu bilden, wobei mindestens eine Seitenwand (5) eines Reliefelements teilweise oder ganz von einer Abdeckungsschicht (11) geformt wird, die sich ausgehend von der dieser Seitenwand zugeordneten Kante (9) erstreckt, **dadurch gekennzeichnet, dass** das Material der Abdeckungsschicht (11) einen höheren Elastizitätsmodul als das den Laufstreifen bildende Kautschukmaterial aufweist, und dass das Reliefelement (2, 7) in seiner Seitenwand eine Vertiefung (12) einer Tiefe P enthält, wobei diese Vertiefung von der Abdeckungsschicht (11) begrenzt wird, und dass, da das Reliefelement (2, 7) eine Breite W hat, die Tiefe P der Vertiefung mindestens gleich 10% der Breite W des Elements (2, 7) und geringer als oder gleich 40% dieser Breite W ist, und dass das Volumen der Vertiefung (12) geringer als 10% des Volumens des Reliefelements (2, 7) ist.

2. Laufstreifen nach Anspruch 1, **dadurch gekennzeichnet, dass** die Abdeckungsschicht (11) sich nicht über die Vertiefung (12) hinaus erstreckt.

3. Laufstreifen nach einem der Ansprüche 1 oder 2, **dadurch gekennzeichnet, dass** die Vertiefung im Schnitt gesehen eine Dreiecksform aufweist, die in das Reliefelement gemäß einer Richtung ragt, die sich von der Kante (9) entfernt.

4. Laufstreifen nach einem der Ansprüche 1 bis 3, **dadurch gekennzeichnet, dass** die Vertiefung (12) an der Lauffläche des Laufstreifens mündet, wobei die diese Vertiefung begrenzende Abdeckungsschicht (11) einen Winkel ($\alpha$) von weniger als 90° mit dieser Lauffläche bildet.

5. Laufstreifen nach einem der Ansprüche 1 bis 4, **dadurch gekennzeichnet, dass** das Reliefelement zwei Vertiefungen (12) aufweist, die je auf zwei gegenüberliegenden Seitenwänden (5) dieses Elements münden.

## Claims

1. Tread made of rubber material for a snow tyre comprising a tread surface intended to be in contact with a road surface when the tyre is being driven on, this tread (1) being provided with a plurality of cuts (3, 4) delimited by walls (5) situated facing one another and forming lateral walls of raised elements (2, 7) of the tread, each of the said lateral walls intersecting the tread surface to form an edge corner (9), at least one lateral wall (5) of a raised element being formed partially or fully by a cover layer (11) extending from the edge corner (9) associated with this lateral wall, **characterized in that** the material of the cover layer (11) has an elastic modulus higher than the elastic modulus of the rubber material of which the tread is made, **and in that** the raised element (2, 7) comprises, in its lateral wall, a depression (12) of depth P, this depression being delimited by the cover layer (11), and **in that** with the raised element (2, 7) having a width W, the depth P of the depression is at least equal to 10% of the width W of the element (2, 7) and less than or equal to 40% of this width W, and **in that** the volume of the depression (12) is less than 10% of the volume of the raised element (2, 7).

2. Tread according to Claim 1, **characterized in that** the cover layer (11) does not extend beyond the depression (12).

3. Tread according to either of Claims 1 and 2, **characterized in that** the depression, when viewed in cross section, has a triangular form pointing in the raised element in a direction away from the edge corner (9).

4. Tread according to any one of Claims 1 to 3, **characterized in that** the depression (12) opens onto the tread surface of the tread, the cover layer (11) delimiting this depression making an angle ($\alpha$) of less than 90° with this tread surface.

5. Tread according to any one of Claims 1 to 4, **characterized in that** the raised element comprises two depressions (12) opening respectively onto two opposite lateral walls (5) of this element.

**Fig. 1**

**Fig. 2**

**Fig. 3**

**Fig.4**

**Fig.5**

9

**Fig.6**

**Fig.7**

**Fig.8**

## RÉFÉRENCES CITÉES DANS LA DESCRIPTION

**Documents brevets cités dans la description**

- US 5840137 A
- US 3462328 A
- JP 2007182160 A
- JP A A
- JP H09150607 B